# EUROPÄISCHE PATENTSCHRIFT

(11) **EP 3 500 420 B1**
(45) Veröffentlichungstag und Bekanntmachung des Hinweises auf die Patenterteilung: **29.12.2021**
(21) Anmeldenummer: 17748763.4
(22) Anmeldetag: 04.08.2017
(51) Int. Cl.: B29C 70/46

(54) **VERFAHREN ZUR HERSTELLUNG EINES FASERVERSTÄRKTEN KUNSTSTOFFBAUTEILS**
METHOD FOR PRODUCING A FIBER-REINFORCED PLASTIC COMPONENT
PROCÉDÉ POUR PRODUIRE UN ÉLÉMENT PLASTIQUE RENFORCÉ PAR DES FIBRES

(30) Priorität: 18.08.2016 DE 102016009907
(43) Veröffentlichungstag der Anmeldung: 26.06.2019
(73) Patentinhaber: Volkswagen Aktiengesellschaft, 38436 Wolfsburg (DE)
(72) Erfinder: KUBISCH, Aline, 38442 Wolfsburg (DE); EHLEBEN, Max, 38126 Braunschweig (DE); MERTENS, Thomas, 38468 Ehra-Lessien (DE); FISCHER, Fabian, 30449 Hannover (DE); BITTERLICH, Maurice, 38165 Lehre (DE); DESBOIS, Philippe, 68535 Edingen (DE)
(74) Vertreter: Bierschneider, Walter
(86) Internationale Anmeldenummer: PCT/EP2017/069778
(87) Internationale Veröffentlichungsnummer: WO 2018/033411

(56) Entgegenhaltungen:
- EP-A2- 0 255 314
- WO-A1-2011/023322
- DE-A1-102012 110 307
- US-A- 4 302 499
- US-A- 6 068 715
- US-A1- 2015 298 400

## Beschreibung

Die Erfindung betrifft ein Verfahren zur Herstellung eines faserverstärkten Kunststoffbauteils nach dem Oberbegriff des Patentanspruches 1, 4 oder 5.

Die konventionelle Herstellung eines faserverstärkten thermoplastischen Kunststoffbauteils erfolgt derzeit mit einem Organoblech oder aus Tape-gelegten zweidimensionalen Platten, die in einem Heizfeld über die Thermoplast-Schmelztemperatur erwärmt und anschließend in einem Presswerkzeug umgeformt werden. Das so hergestellte Kunststoffbauteil kann zusätzlich in einem Spritzgusswerkzeug mit lokalen Krafteinleitungsstrukturen, wie zum Beispiel Rippen und/oder Metall-Inserts, hinterspritzt werden, und zwar mit einem konventionellen kurzfaserverstärkten Thermoplast.

Aus der WO 2012/116947 A1 ist ein Verfahren zur Herstellung von reaktiven Prepregs, das heißt von endlosfaserverstärkten, flächigen Halbzeugen mit Polyamidmatrix bekannt. In dem Verfahren werden zunächst textile Strukturen mit einer flüssigen Ausgangskomponente der Polyamidmatrix, das heißt geschmolzenes Lactam einschließlich zugegebener Katalysatoren und/oder Aktivatoren, vorimprägniert, und zwar in einem kontinuierlichen Prozess. Anschließend wird die vorimprägnierte textile Endlos-Struktur in einer Schneidstation zu faserverstärkten flächigen Halbzeugen konfektioniert und in einer Stapelstation übereinander gestapelt. Im weiteren Prozessverlauf werden die Faserhalbzeuge in eine Werkzeugkavität eines Press- und/oder Tiefziehwerkzeuges eingelegt, in dem die Formgebung erfolgt, und zwar bei einer Temperatur oberhalb der Polymerisations-Starttemperatur. Auf diese Weise polymerisiert das vorimprägnierte Lactam zu einem Polyamid. Durch das gleichzeitige Tiefziehen/Pressen wird das faserverstärkte, flächige Halbzeug in die beabsichtigte Form des herzustellenden Kunststoffbauteils gebracht.

Aus der WO 2011/023322 A1 ist ein faserverstärktes Polyurethan-Formteil bekannt, das Krafteinleitungsstrukturen aufweist, wie zum Beispiel Rippen, Stege oder Dome, die faserverstärkt sind. Aus der DE 10 2012 110 307 A1 ist ein Verfahren zur Herstellung von Verbundmaterial-Bauteilen bekannt, die aus Kunststoff aufgebaut sind und durch ein Hochdruck-Harztransferpressen hergestellt sind. Aus der EP 2 681 038 B1 ist ein weiteres Verfahren zur Herstellung von faserverstärkten, flachen Halbzeugen mit Polyamidmatrix bekannt. Aus der DE 10 2013 210 934 A1 ist ein Verfahren zum Herstellen eines Faserverbundbauteils bekannt, das aus Lang- und Kurzfasern hergestellt ist.

Aus der US 6 068 715 A, die die Oberbegriffe der Ansprüche 1, 4 und 5 offenbart, ist ein gattungsgemäßes Verfahren zur Herstellung eines faserverstärkten Kunststoffbauteils bekannt. Aus der WO 2011/023322 A1 ist ein faserverstärktes Polyurethan-Formteil mit dreidimensional erhobenen Strukturen bekannt. Aus der DE 10 2012 110307 A1 ist ein Verfahren zur Herstellung von Verbundmaterial-Bauteilen aus Kunststoff bekannt. Aus der EP 0 255 314 A2 und aus der US 4 302 499 A ist jeweils ein faserverstärktes Kunststoffbauteil bekannt. Aus der US 2015/298400 A1 ist ein Verfahren zur Herstellung von Prepregs bekannt.

Die Aufgabe der Erfindung besteht darin, ein Verfahren zur Herstellung eines faserverstärkten Kunststoffbauteils bereitzustellen, bei dem die Funktionalität sowie die Einsatzmöglichkeiten des faserverstärkten Kunststoffbauteils erweitert sind.

Die Aufgabe ist durch die Merkmale des Patentanspruches 1, 4 oder 5 gelöst. Bevorzugte Weiterbildungen der Erfindung sind in den abhängigen Ansprüchen offenbart. Erfindungsgemäß wird in dem aus der WO 2012/116947 A1 bekannten Verfahren zumindest eine zweischichtige oder mehrschichtige textile Struktur aus einer Trägerschicht und einer Kurzfaserschicht bereitgestellt, die auf der Trägerschicht aufgetragen ist. In der Kurzfaserschicht sind die Kurzfasern mit einer noch nicht polymerisierten, reaktiven thermoplastischen Ausgangskomponente eines Matrixmaterials, das heißt eine reaktive Monomerlösung aus zum Beispiel Lactam, durchtränkt.

Das Auftragen der Kurzfaser kann durch Aufrieseln, Aufschütten zum Beispiel manuell erfolgen. Dadurch entsteht ein zweischichtiges Prepreg, das im Anschluss analog zum Verfahren aus der WO 2012/116947 A1 konfektioniert und weiterverarbeitet werden kann. Bevorzugt ist dabei die Verwendung von Kurzfasern mit einer Faserlänge von 0,05 bis 50mm, wobei kürzere Faserlängen im Bereich von 0,1 bis 1,0mm besonders bevorzugt werden. Der Anteil der Kurzfasern liegt bevorzugt in einem Bereich von 10 bis 40 wt.%.

Das Auftragen und das Tränken der Fasern mit der Matrixmaterial-Ausgangskomponente kann in unterschiedlicher Weise erfolgen: Gemäß einer ersten Ausführungsvariante können die frischen, das heißt im Trockenzustand befindlichen Kurzfasern aus Endlosfaserrovings mit Hilfe eines Schneidwerks unmittelbar in der Herstellungsanlage geschnitten werden, und zwar direkt vor dem Auftrag der Fasern respektive der Matrixmaterial-Ausgangskomponente. Alternativ dazu kann frisches Kurzfaser-Material zugekauft sowie aufgetragen bzw. direkt der Matrixmaterial-Ausgangskomponente zugemischt werden.

Die Trägerschicht ist bevorzugt eine Faserstruktur mit zumindest einer Endlosfaserlage, die in einem Imprägnierschritt mit der schmelzflüssigen reaktiven Monomerlösung (das heißt der reaktiven, thermoplastischen Ausgangskomponente des Matrixmaterials) durchtränkt wird.

Das Auftragen der Kurzfasern auf die Trägerschicht kann in unterschiedlicher Weise erfolgen: So können in einer ersten, nicht von der Erfindung umfassten Prozessabfolge die Kurzfasern im Trockenzustand zeitlich vor einem Imprägnierschritt auf die noch trockene Trägerschicht aufgetragen werden. Anschließend erfolgt der Imprägnierschritt, bei dem sowohl die Trägerschicht als auch die Kurzfasern mit der reaktiven Monomerlösung durchtränkt werden.

Alternativ dazu können die trockenen Kurzfasern auf die bereits imprägnierte Trägerschicht aufgetragen werden. Die noch trockenen Kurzfasern müssen anschließend in einem separaten zweiten Imprägnierschritt noch mit einer reaktiven Monomerlösung durchtränkt werden, so dass insgesamt ein erster Imprägnierschritt (zum Imprägnieren der Trägerschicht) und ein zweiter Imprägnierschritt (zum Imprägnieren der Kurzfasern) erfolgt. In diesem Fall kann die Viskosität der ersten und zweiten Imprägnierung unterschiedlich bemessen sein, um zum Beispiel im nachfolgenden Pressvorgang eine bessere Fasermitnahme zu erzielen. Hierbei ist eine zusätzliche zweite Dosieranlage zur Imprägnierung der Kurzfasern erforderlich. In einer prozesstechnisch einfacheren Variante wird auf den obigen zweiten Imprägnierschritt (zum Imprägnieren der Kurzfasern) verzichtet. Anstelle dessen wird als Matrixmaterial für die aufgetragenen Kurzfasern ein Überschußmaterial des Matrixmaterials der Trägerschicht genutzt.

In einer weiteren alternativen Prozessabfolge können die trockenen Kurzfasern in einer Dosieranlage der flüssigen reaktiven Monomerlösung beigemischt werden. Anschließend wird in einem Imprägnierschritt die reaktiven Monomerlösung mit den darin enthaltenden Kurzfasern auf die noch trockene Trägerschicht aufgetragen. In diesem Fall erfolgt die Durchtränkung der Trägerschicht sowie der Kurzfaser-Auftrag auf die Trägerschicht gleichzeitig. Alternativ dazu kann in einem ersten Imprägnierschritt die Trägerschicht mit einer kurzfaserfreien reaktiven Monomerlösung durchtränkt werden. Anschließend kann ein Auftrags-Prozessschritt erfolgen, in dem eine reaktiven Monomerlösung mit beigemischten Kurzfasern auf die Trägerschicht aufgetragen wird.

In einer weiteren Ausführungsform kann unter Bildung eines Sandwich-Aufbaus auf die Kurzfaserschicht eine dritte Faserschicht aufgetragen werden. Diese Schicht kann aus einer zusätzlichen textilen Struktur bestehen, zum Beispiel einem Gewebe, einem Vlies oder einem Gelege. Weiterhin besteht die Möglichkeit, die dadurch entstehende mittlere Kurzfaserschicht aufzuschäumen. Ein solches Aufschäumen kann durch ein physikalisches oder chemisches Schäumen zum Beispiel durch schäumbare, kurzfaserfreie Folien oder durch ein schäumbares Matrixmaterial (mit Kurzfasern) über eine Dosieranlage ermöglicht werden.

Zusätzlich kann unabhängig von der Anzahl zusätzlich aufgetragener Schichten aus kurzfaser- und endlosfaserverstärktem Material auf die unterste und oberste Deckschicht eine Kaschierfolie aufgetragen werden, die das Prepreg schützt. Als Erweiterung dazu können auch Bauteile mit Sichtseite hergestellt werden, bei denen einseitig eine Folie eingesetzt wird, die neben der Schutz- auch eine Oberflächenfunktion hat. Alternativ kann auch die Folie als Schutzfolie beibehalten werden und zur Oberflächenvergütung ein zusätzliches Vlies unter der Schutzfolie eingesetzt werden. Es ist zudem auch möglich, die Folie vor dem Endbeschnitt der getränkten Faserstruktur ein- oder beidseitig abzulösen. In diesem Fall müssen jedoch die Prepregs bis zur Fertigteilherstellung insbesondere vor Luftfeuchtigkeitseintrag geschützt werden.

Wie bereits oben erwähnt, wird das erfindungsgemäße Verfahren in Anlehnung an die WO 2012/116947 A1 durchgeführt, unterscheidet sich jedoch im Hinblick auf die realisierbaren Kunststoffbauteil-Geometrien. Zur Kunststoffbauteil-Herstellung wird das zumindest zwei- oder mehrschichtige faserverstärkte textile Faserhalbzeug in die Werkzeugkavität eines beheizten Presswerkzeugs eingelegt und im Pressvorgang zu dem Kunststoffbauteil umgeformt. Die Temperatur der beheizten Werkzeugform liegt dabei vorzugsweise im Bereich von 140 bis 160°C, das heißt zwingend oberhalb der Polymerisations-Starttemperatur. Während des Pressvorgangs schmilzt die ausgehärtete Monomerlösung (das heißt Lactam), wird dadurch fließfähig und kann anschließend polymerisieren.

Das erfindungsgemäß hergestellte faserverstärkte Kunststoffbauteil kann bevorzugt eine davon abragende kurzfaserverstärkte Krafteinleitungsstruktur aufweisen. In diesem Fall ist in einer Werkzeughälfte des Presswerkzeugs eine Negativform dieser Krafteinleitungsstruktur nachgebildet. Das Faserhalbzeug ist dabei so in die Werkzeug-Kavität einzulegen, dass dessen Kurzfaserschicht der in der Werkzeughälfte nachgebildeten Negativform der Krafteinleitungsstruktur zugewandt ist. Zudem ist es bevorzugt, wenn die Werkzeughälfte in einer Werkzeug-Hochrichtung betrachtet oben liegt, so dass die erwärmte, schmelzflüssige Matrixmaterial-Ausgangskomponente nach oben in die Krafteinleitungsstruktur-Negativform der oberen Werkzeughälfte gepresst wird. Dadurch, dass die Krafteinleitungsstruktur aus der Grundfläche des Prepregs heraus nach oben gepresst wird, wird eine deutliche bessere Haftfestigkeit der Krafteinleitungsstruktur erreicht, und zwar im Vergleich zu einer in der unteren Werkzeughälfte ausgebildeten Negativform der Krafteinleitungsstruktur. In diesem Fall würde die Negativform dadurch gefüllt werden, dass die meist sehr dünnflüssige Matrixmaterial-Ausgangskomponente schwerkraftbedingt hinlaufen und dort bereits polymerisieren kann. In diesem Fall ist jedoch nicht gewährleistet, dass zum Polymerisations-Startzeitpunkt bereits eine ausreichende Verbindung mit dem oben liegenden Prepreg erzeugt worden ist. Dies kann zu reduzierten Haftfestigkeiten der Krafteinleitungsstruktur führen.

Zusätzlich kann vor der Durchführung des Pressvorgangs auch ein Insert in die Krafteinleitungsstruktur integriert werden. Dazu ist es sinnvoll, die verwendeten Inserts, etwa Gewindebuchsen, Gewindebolzen, etc. schon vor dem Pressvorgang in das Presswerkzeug einzusetzen und beispielsweise über Magnete, Losteile, Schieber oder Hinterschnitte an der gewünschten Position zu halten. Gegebenenfalls können die Inserts durch das Prepreg durchgeführt werden. Abhängig von der Insert-Art, der konstruktiven Bauteilausführung und der Ausführung des Presswerkzeugs können sich die Magnete, Losteile, Schieber oder Hinterschnitte in der oberen oder unteren Werkzeughälfte befinden.

Werden die Inserts über Losteile eingebracht, so müssen die Inserts vor dem Pressvorgang auf die Losteile aufgeschraubt werden. Bei der Bauteilentformung werden die Losteile zunächst mit dem Bauteil aus dem Werkzeug entnommen, von den Inserts abgeschraubt und wieder in das Werkzeug eingesetzt. Aufgrund der niedrigen Viskosität der flüssigen Matrixmaterial-Ausgangskomponente (das heißt die reaktive Monomerlösung, insbesondere eine Lactamschmelze) muss auf eine ausreichende Dichtung der Losteile geachtet werden, damit diese im Pressvorgang nicht mit der auspolymerisierenden Matrixmaterial-Ausgangskomponente "hinterpresst" werden und dadurch im Werkzeug festsitzen. Bevorzugte Geometrie der Dichtungen sind O-Dichtringe. Bei der Wahl des Dichtungsmaterials muss auf Beständigkeit gegenüber der Matrixmaterial-Ausgangskomponente (das heißt bevorzugt Lactam) geachtet werden.

Sofern Dauermagnete verwendet werden, muss berücksichtigt werden, dass eine magnetische Halterung keine Sicherung gegen verrutschen des Inserts während des Pressvorgangs bietet. Auch in diesem Fall müssen die Inserts vor dem Pressvorgang auf die Dauermagnete aufgesetzt werden.

Sollten Schieber verwendet werden, müssen diese so ausgeführt werden, dass sie sich aus dem Gewinde entfernen lassen, beispielsweise drehbar oder verkleinerbar sind. Auch in diesem Fall müssen die Inserts vor dem Pressvorgang auf die Schieber aufgebracht werden.

Werden Hinterschnitte für die Aufnahme der Inserts verwendet, müssen diese so ausgeführt werden, dass eine leichte Entformung gewährleistet ist. Auch in diesem Fall müssen die Inserts vor dem Pressvorgang in das Presswerkzeug eingebracht werden.

In allen Fällen ist auf die Abdichtung der Inserts zu achten, um das Volllaufen des Gewindes durch die dünnflüssige Matrixmaterial-Ausgangskomponente zu verhindern.

In allen Fällen müssen die Inserts durch das beheizte Werkzeug erwärmt werden, bevor der Pressvorgang gestartet wird, da eine zu niedrige Temperatur (das heißt zum Beispiel unterhalb 120°C) die Polymerisation der Matrixmaterial-Ausgangskomponente (das heißt Lactamschmelze) beeinträchtigt. Der dabei verwendete Pressdruck kann in einem Bereich von 5 bis 500 bar, vorzugsweise jedoch im Bereich von kleiner als 250 bar liegen.

Wie bereits oben angedeutet, weist die im Presswerkzeug erwärmte, schmelzflüssige Matrixmaterial-Ausgangskomponente eine äußerst geringe Viskosität auf, an die das Presswerkzeug speziell anzupassen ist. Hierzu kann das Presswerkzeug in der Werkzeughochrichtung eine bereits erwähnte obere Werkzeughälfte sowie eine untere Werkzeughälfte aufweisen, die die Werkzeugkavität definieren, in die das Faserhalbzeug einlegbar ist. Das Presswerkzeug ist so ausgelegt, dass im geschlossenen Zustand die obere Werkzeughälfte in die untere Werkzeughälfte eingetaucht ist und über einen vertikalen Tauchkantenspalt von der unteren Werkzeughälfte beabstandet ist. Der Tauchkantenspalt mündet unten in die Werkzeugkavität und oben in einen, insbesondere horizontalen Dichtungsspalt, der zwischen der oberen und unteren Werkzeughälfte ausgebildet ist. Der Dichtungsspalt kann bevorzugt in einen, dem Tauchkantenspalt zugewandten Drosselungsspalt und in eine Dichtzone mit zumindest einem, insbesondere zwei um die Werkzeugkavität umlaufenden Dichtelementen unterteilt sein. Zwischen dem inneren ersten Dichtelement und dem äußeren zweiten Dichtelement kann eine Überlaufkavität in der unteren Werkzeughälfte ausgebildet sein. Beim Pressvorgang im beheizten Presswerkzeug schmilzt die Matrixmaterial-Ausgangskomponente im Faserhalbzeug auf und füllt die Werkzeugkavität inklusive der Negativform der Krafteinleitungsstruktur. Zudem steigt die schmelzflüssige Matrixmaterial-Ausgangskomponente in dem Tauchkantenspalt nach oben bis an das innere erste Dichtungselement. Dadurch kann gewährleistet werden, dass die Werkzeugkavität inklusive der Negativform der Krafteinleitungsstruktur vollständig gefüllt werden.

Das oben erwähnte Dichtungskonzept ist mehrstufig aufgebaut und speziell auf eine dünnflüssige Matrixmaterial-Ausgangskomponente (nachfolgend als Lactamschmelze bezeichnet) ausgelegt. Zudem kann mit dem mehrstufigen Dichtungskonzept ein Forminnendruck in der Werkzeugkavität erhöht werden, was zu einer besseren Kavitätsfüllung beiträgt.

Die Lactamschmelze steigt im Pressvorgang durch den Forminnendruck in der Kavität nach oben. Ist eine überschüssige Lactamschmelze vorhanden, die nicht mehr in der verfügbaren Werkzeugkavität aufgenommen werden kann, so steigt diese zusätzlich im Tauchkantenspalt nach oben. Durch den Drosselungsspalt wird die aus dem Tauchkantenspalt austretende Lactamschmelze zunächst stark gebremst/gedrosselt, wodurch sich der Forminnendruck erhöht. Der Forminnendruck kann durch das innere erste Dichtelement (bevorzugt eine umlaufende Runddichtung) dadurch eingestellt werden, dass unterschiedliche Dichtungsdurchmesser eingesetzt werden. Wird das innere erste Dichtungselement so eingestellt, dass es keinen Kontakt mit der oberen Werkzeughälfte hat, so wird die aus dem Drosselungsspalt austretende Lactamschmelze erneut gedrosselt, jedoch nicht vollständig zurückgehalten. Diese sammelt sich nachfolgend in der flachen sowie breiten Überlaufkavität mit bevorzugt umlaufendem, halbrundem Profil. Um sicherzustellen, dass dort keine Lactamschmelze über das Presswerkzeug hinaus austreten kann, ist das äußere zweite Dichtelement bereitgestellt, das ebenfalls einstellbar ist. Dessen Durchmesser ist jedoch so zu wählen, dass es das Presswerkzeug vollständig abdichtet.

Bei der Einstellung des Forminnendruckes mittels unterschiedlicher Dichtungsdurchmesser gilt für eine konstante Menge an Lactamschmelze folgendes: Soll der Forminnendruck erhöht werden, kann das erste Dichtelement so eingestellt werden, dass es vollständig abdichtet. Die Lactamschmelze gelangt dann nicht in die Überlaufkavität und die zu füllende Werkzeugkavität ist insgesamt kleiner. Falls der Forminnendruck jedoch reduziert werden soll, kann das erste Dichtelement etwas kleiner ausgelegt werden, so dass es lediglich eine Drosselungsfunktion hat und die Lactamschmelze in die Überlaufkavität abfließen kann. Das zweite Dichtelement muss demnach etwas größer ausgelegt sein, damit dieses dann vollständig abdichtet.

Um beim Pressvorgang eine ausreichende Fasermitnahme und Faserverteilung in der Negativform der Krafteinleitungsstruktur zu erzielen, muss die Lösungsviskosität der Lactamschmelze ausreichend groß sein, damit die Kurzfasern in die Negativform geschwemmt werden. Dazu wird ein chemisches Verdickungsmittel mit dem Lactam vermischt und darin vollständig gelöst. Über den Anteil des Verdickungsmittels an der Gesamtmasse der entstehenden Lösung lässt sich die Viskosität der Lösung einstellen. Dieser Anteil liegt vorzugsweise in einem Bereich von 1 bis 10 wt.%, wodurch eine Erhöhung der Viskosität von 5 mPas (normale Lactamschmelze) auf 200 bis 2000 mPas erreicht werden kann.

Die Erfindung und ihre vorteilhaften Aus- und Weiterbildungen sowie deren Vorteile werden nachfolgend anhand von Zeichnungen näher erläutert.

Es zeigen:
- Figur 1: in einer Seitenschnittdarstellung ein fertiggestelltes faserverstärktes Kunststoffbauteil;
- Figuren 2 und 3: jeweils Prozessstationen einer Prozessanordnung zur Herstellung des in der Figur 1 gezeigten Kunststoffbauteils;
- Figuren 4 bis 6: jeweils Ansichten entsprechend der Figur 2 von abgewandelten Prozessanordnungen; und
- Figuren 7 und 8: jeweils einen Schichtaufbau eines faserverstärkten textilen Faserhalbzeugs (das heißt Prepregs) gemäß unterschiedlicher Ausführungsvarianten.

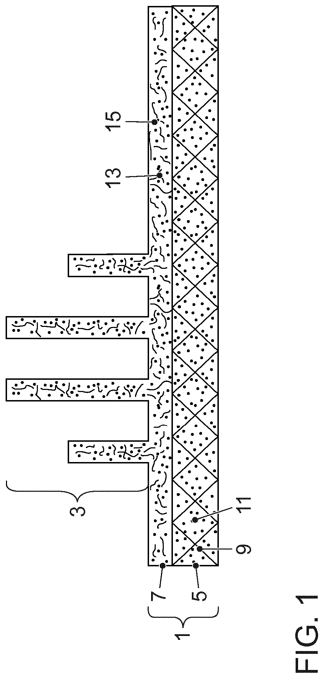

In der Figur 1 ist in einer Seitenschnittdarstellung ein faserverstärktes Kunststoffbauteil gezeigt, das einen flächigen Grundkörper 1 mit einer davon abragenden Rippenstruktur 3 aufweist. Der Grundkörper 1 ist zweischichtig aus einer Trägerschicht 5 und einer darauf aufgetragenen Kurzfaserschicht 7 aufgebaut. Die Trägerschicht 5 weist in der Figur 1 beispielhaft eine Endlosfaserlage 9 auf, die in einem polymerisierten Thermoplast-Matrixmaterial 11 eingebettet ist. Die Kurzfaserschicht 7 weist Kurzfasern 13 auf, die ebenfalls in einem polymerisierten Thermoplast-Matrixmaterial 15 eingebettet ist. Die Thermoplast-Matrixmaterialien 11, 15 können je nach Herstellungsart materialidentisch oder auch unterschiedlich sein. In der Figur 1 ist die Rippenstruktur 3 ausschließlich durch das Material der Kurzfaserschicht 7 gebildet. Die Figur 1 und auch die folgenden Figuren sind im Hinblick auf ein einfaches Verständnis der Erfindung angefertigt. Von daher sind die Figuren lediglich grob vereinfachte Darstellungen, die nicht realitätsgetreu sind.

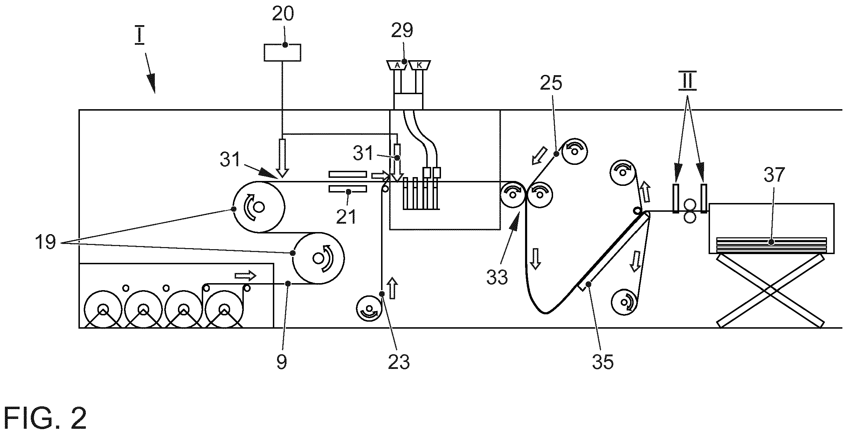

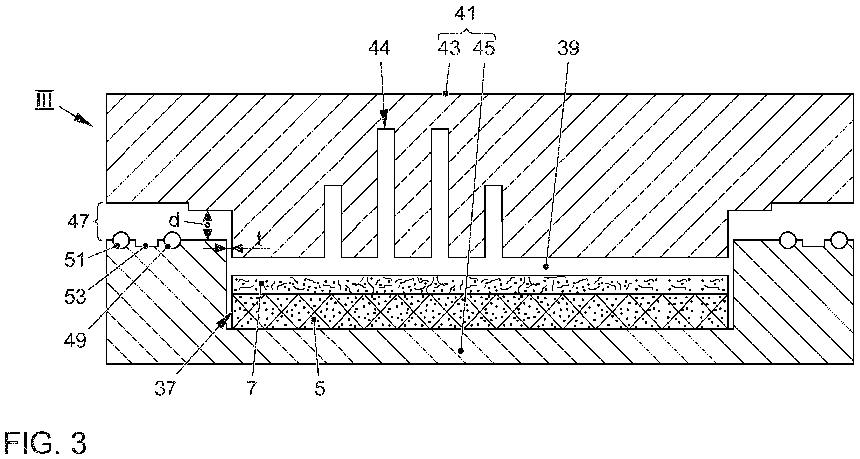

Nachfolgend wird anhand der Figuren 2 und 3 eine Prozessanordnung beschrieben, mit der das in der Figur 1 gezeigte Kunststoffbauteil hergestellt wird: So weist die Prozessanordnung in der Figur 2 eine Fertigungsstation I auf, in der exemplarisch eine noch trockene Endlosfaserlage 9 über Heizwalzen 19 durch eine IR-Heizung 21 geführt wird und auf eine untere Trägerfolie 23 abgelegt wird, die zwischen einer unteren Folienabwicklung und einer unteren Folienaufwicklung verläuft. Die auf der Folie 23 abgelegte Endlosfaserlage 9 wird auf eine Temperatur unterhalb einer Polymerisations-Starttemperatur einer Matrixmaterial-Ausgangskomponente (nachfolgend Lactam) erwärmt, die Lactam mit einem Aktivator, einem Katalysator und ggf. mit Additiven enthält. Mittels einer Dosieranlage 29 wird die Endlosfaserlage 9 mit schmelzflüssigem Lactam durchtränkt. In einer Prozessrichtung zwischen den Heizwalzen 19 und der IR-Heizung 21 sowie (alternativ oder zusätzlich) zwischen der IR-Heizung 21 und der Dosieranlage 29 sind Auftragsstellen 31 vorgesehen. An den Auftragsstellen 31 werden die in einem Kurzfaser-Reservoir 20 gespeicherten trockenen Kurzfasern 13 auf die ebenfalls noch trockene Endlosfaserlage 9 aufgebracht, und zwar unter Bildung eines Zweischichtaufbaus bestehend aus der Endlosfaserlage 9 und der Kurzfaserschicht 13. Die beiden Schichten 9, 13 werden in einem Imprägnierschritt mittels der Dosieranlage 29 gemeinsam mit dem schmelzflüssigen Lactam durchtränkt. Anschließend wird der mit Lactam durchtränkte Zweischichtaufbau zusammen mit einer weiteren Folie 25 durch einen Quetschkalander 33 zu einer Kühlstrecke 35 geführt, in der die textile Lagenstruktur abkühlt (das heißt konsolidiert) wird. Die konsolidierte textile Lagenstruktur wird in einer nachfolgenden Schneidstation II zu einzelnen vorimprägnierten textilen Faserhalbzeugen 37 konfektioniert.

Anschließend werden die konfektionierten Faserhalbzeuge 37 in eine in der Figur 3 gezeigte Pressenstation III transferiert und in eine Werkzeugkavität 39 eines beheizbaren Presswerkzeuges 41 eingelegt. Das Presswerkzeug 41 weist eine obere Werkzeughälfte 43 sowie eine untere Werkzeughälfte 45 auf. In der oberen Werkzeughälfte 43 ist die Negativform 44 der in der Figur 1 gezeigten Rippenstruktur 3 des Kunststoffbauteils nachgebildet.

In der Figur 3 ist das Presswerkzeug 41 nur teilweise geschlossen gezeigt. Bei vollständig geschlossenem Presswerkzeug 41 ist die obere Werkzeughälfte 43 in die untere Werkzeughälfte 45 eingetaucht. Die beiden Werkzeughälften 43, 45 sind über einen vertikalen Tauchkantenspalt t voneinander beabstandet. Dieser mündet unten randseitig in die Werkzeugkavität 39 und oben in einen horizontalen Dichtungsspalt 47, der zwischen den oberen und unteren Werkzeughälften 43, 45 gebildet ist. Der Dichtungsspalt 47 ist in der Figur 3 unterteilt in einen dem Tauchkantenspalt t zugewandten Drosselungsspalt d mit geringem Strömungsquerschnitt und einer davon abgewandten zweistufigen Dichtzone, die aus einem inneren ersten Dichtelement 49 und einem äußeren zweiten Dichtelement 51 aufgebaut ist. Zwischen den beiden umlaufenden Dichtelementen 49, 51 ist in der unteren Werkzeughälfte 45 eine Überlaufkavität 53 ausgebildet. Die Dichtelemente 49, 51 und die Überlaufkavität 53 können in der oberen Werkzeughälfte 43 oder in der unteren Werkzeughälfte 45 angeordnet sein.

Wie aus der Figur 3 weiter hervorgeht, wird das Faserhalbzeug 37 so in die Werkzeugkavität 39 eingelegt, dass dessen Kurzfaserschicht 7 der in der oberen Werkzeughälfte 43 ausgebildeten Negativform 44 der Rippenstruktur 3 zugewandt ist. Anschließend wird unter Aufbau eines Forminnendruckes sowie unter gleichzeitiger Erwärmung des Presswerkzeugs 41 die Formgebung des Kunststoffbauteils gestartet.

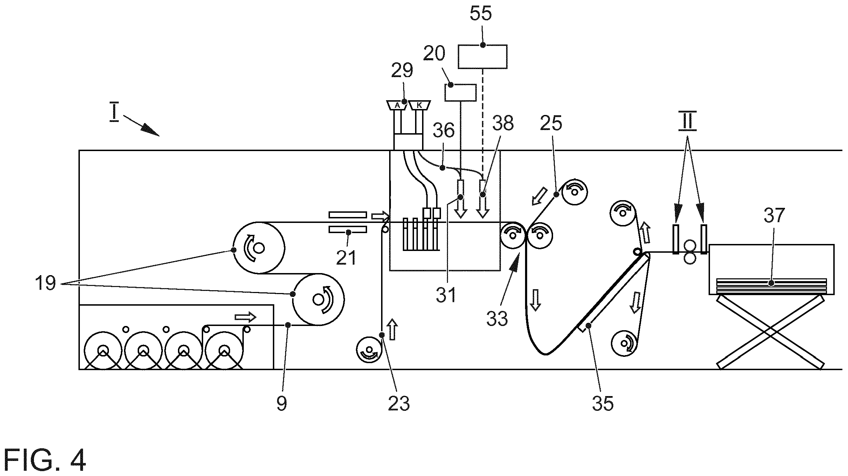

In den Figuren 4 bis 6 sind alternative Anordnungen der in der Figur 2 gezeigten Fertigungsstation I angedeutet. In der Figur 4 ist eine erste Dosieranlage 29 gezeigt, mit der die noch kurzfaserfreie, trockene Endlosfaserlage 9 imprägniert wird. In der Prozessrichtung nachgeschaltet ist eine Kurzfaser-Auftragsstelle 31 vorgesehen, bei der von dem Kurzfaser-Reservoir 20 trockene Kurzfasern 13 auf die imprägnierte Endlosfaserlage 9 aufgebracht werden. Zudem ist in der Figur 4 von der Dosieranlage 29 eine Verbindungsleitung 36 zu einer Matrixmaterial-Auftragsstelle 38 geführt, die in der Prozessrichtung nach der Kurzfaser-Auftragsstelle 31 positioniert ist. Als Alternative ist in der Fig. 4 auch eine zusätzliche Dosieranlage 55 angedeutet, mit der die schmelzflüssige Matrixmaterial-Ausgangskomponente unabhängig von der ersten Dosieranlage 29 zur Matrixmaterial-Auftragsstelle 38 geleitet wird, um die trockenen Kurzfasern 13 der Kurzfaserschicht 7 mit der Matrixmaterial-Ausgangskomponente zu imprägnieren. Dadurch kann auch eine unterschiedliche Viskosität der Matrixmaterial-Ausgangskomponente für die endlosfaserverstärkte Trägerschicht (Bezugsziffer 5 in der Figur 1) und für die Kurzfaser-Trägerschicht 7 erzielt werden.

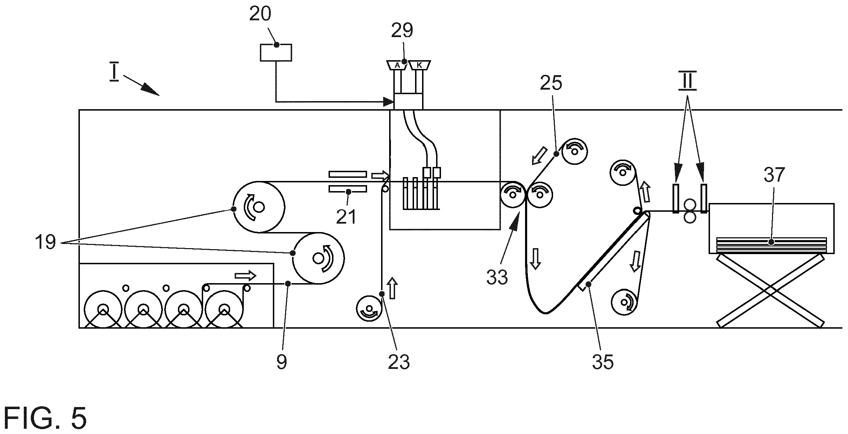

In der Figur 5 ist das Kurzfaser-Reservoir 20 unmittelbar mit der Dosieranlage 29 gekoppelt. In diesem Fall werden die Kurzfasern 13 nicht an Auftragsstellen 31 trocken auf die Endlosfaserlage 9 aufgetragen, sondern in der Dosieranlage 29 mit der schmelzflüssigen Matrixmaterial-Ausgangskomponente vermischt. Beim Auftragen der Matrixmaterial-Ausgangskomponente erfolgt somit sowohl die Imprägnierung der Endlosfaserlage 9 als auch der Kurzfaser-Auftrag in einem gemeinsamen Prozessschritt.

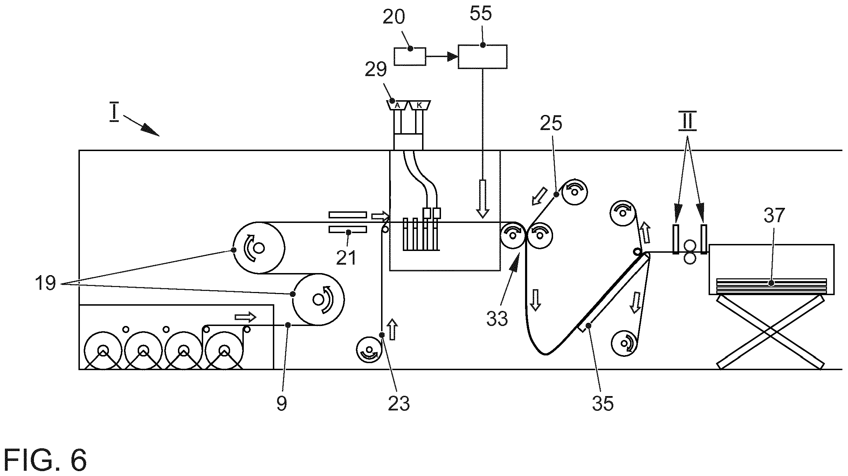

In der Figur 6 sind - wie auch in der Figur 4 - zwei separate Dosieranlagen 29, 55 bereitgestellt. Mittels der ersten Dosieranlage 29 erfolgt eine Imprägnierung der Endlosfaserlage 9 mit kurzfaserfreier Matrixmaterial-Ausgangskomponente. Die zweite Dosieranlage 55 ist mit dem Kurzfaser-Reservoir 20 gekoppelt, wodurch die Kurzfasern 13 in der Dosieranlage 55 mit der schmelzflüssigen Matrixmaterial-Ausgangskomponente vermischt werden. Anschließend erfolgt ein Auftrag-Schritt, bei dem die Matrixmaterial-Ausgangskomponente mit den beigemischten Kurzfasern 13 auf die bereits imprägnierte Endlosfaserlage 9 aufgetragen wird. Somit kann auch hier-wie in der Fig. 4 - eine unterschiedliche Viskosität der Matrixmaterial-Ausgangskomponente für die endlosfaserverstärkte Trägerschicht (Bezugsziffer 5 in der Figur 1) und für die Kurzfaser-Trägerschicht 7 erzielt werden.

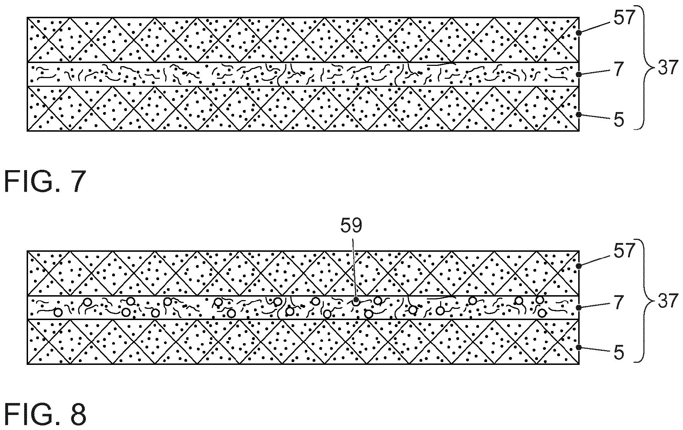

In der Figur 7 ist ein alternativer Schichtaufbau eines Kunststoffbauteils gemäß einem weiteren Ausführungsbeispiel gezeigt. Demzufolge ist unter Bildung einer Sandwich-Struktur eine dritte Faserschicht 57 auf die Kurzfaserschicht 7 aufgebracht. Die dritte Faserschicht 57 kann beispielhaft eine endlosfaserverstärkte Struktur aufweisen. In der Figur 8 weist darüber hinaus die mittlere Kurzfaserschicht 7 eine Schaumstruktur 59 auf. Die in den Figuren 3, 7 und 8 gezeigten Faserhalbzeuge 37 müssen nicht zwangsläufig zu dem in der Figur 3 gezeigten Presswerkzeug 41 transferiert werden, sondern können in beliebige andere beheizbare Press- oder Tiefziehwerkzeuge transferiert und dort eingelegt werden.

### Bezugszeichenliste

- 1: Grundkörper
- 3: Rippenstruktur
- 5: Trägerschicht
- 7: Kurzfaserschicht
- 9: Endlosfaserlage
- 11: Matrixmaterial
- 13: Kurzfaser
- 15: Matrixmaterial
- 19: Heizwalzen
- 20: Kurzfaser-Reservoir
- 21: IR-Heizung
- 23: untere Folie
- 25: obere Folie
- 29: Dosieranlage
- 31: Auftragsstellen
- 33: Quetschkalander
- 35: Kühlstrecke
- 36: Verbindungsleitung
- 37: Faserhalbzeug
- 38: Lactam-Auftragsstelle
- 39: Werkzeugkavität
- 41: Presswerkzeug
- 43: obere Werkzeughälfte
- 44: Negativform der Rippenstruktur 3
- 45: untere Werkzeughälfte
- 47: Dichtungsspalt
- 49: inneres Dichtelement
- 51: äußeres Dichtelement
- 53: Überlaufkavität
- 55: Dosieranlage
- 57: dritte Faserschicht
- 59: Schaumstruktur
- I: Fertigungsstation
- II: Schneidstation
- III: Pressstation
- t: Tauchkantenspalt
- d: Dichtungsspalt

## Patentansprüche

1. Verfahren zur Herstellung eines faserverstärkten Kunststoffbauteils, mit den folgenden Prozessschritten
- Bereitstellen einer zumindest zwei- oder mehrschichtigen textilen Struktur aus einer Trägerschicht (5), auf der eine Kurzfaserschicht (7) aufgetragen ist, in der Kurzfasern (13) mit einer noch nicht polymerisierten reaktiven thermoplastischen Ausgangskomponente eines Matrixmaterials (15) durchtränkt werden,
- Konfektionieren der textilen Struktur zu einem faserverstärkten textilen Faserhalbzeug (37), und
- Pressen/Tiefziehen des faserverstärkten textilen Faserhalbzeugs (37) in die Form des herzustellenden faserverstärkten Kunststoffbauteils, und zwar bei gleichzeitiger Erwärmung des faserverstärkten textilen Faserhalbzeugs (37) auf eine Temperatur oberhalb der Polymerisations-Starttemperatur, wobei die Trägerschicht (5) zumindest eine Endlosfaserlage (9) aufweist, die in einem Imprägnierschritt mit einer reaktiven, thermoplastischen Ausgangskomponente eines Matrixmaterials (11) durchtränkt wird, und wobei die Kurzfasern (13) als prozessfremdes, frisches, das heißt in einem Trockenzustand befindliches Fasermaterial mit vordefinierter Faserlänge bereitgestellt werden, **dadurch gekennzeichnet, dass** die trockenen Kurzfasern (13) auf die bereits imprägnierte Trägerschicht (5) aufgetragen werden.

2. Verfahren nach Anspruch 1, **dadurch gekennzeichnet, dass** als Matrixmaterial für die aufgetragenen, trockenen Kurzfasern (13) ein Überschußmaterial des Matrixmaterials der Trägerschicht (5) genutzt wird.

3. Verfahren nach Anspruch 1, **dadurch gekennzeichnet, dass** eine Tränkung der auf die imprägnierte Trägerschicht (5) aufgetragenen, trockenen Kurzfasern (13) in einem prozesstechnisch nachgeschalteten zweiten Imprägnierschritt erfolgt, und zwar an einer Matrixmaterial-Auftragsstelle (38), die in der Prozessrichtung nach einer Kurzfaser-Auftragsstelle (31) positioniert ist, und dass insbesondere die Matrixmaterial-Auftragsstelle (38) entweder von der Dosieranlage (29) oder von einer separaten Dosieranlage (55) mit Matrixmaterial versorgt wird.

4. Verfahren zur Herstellung eines faserverstärkten Kunststoffbauteils, mit den folgenden Prozessschritten
- Bereitstellen einer zumindest zwei- oder mehrschichtigen textilen Struktur aus einer Trägerschicht (5), auf der eine Kurzfaserschicht (7) aufgetragen ist, in der Kurzfasern (13) mit einer noch nicht polymerisierten reaktiven thermoplastischen Ausgangskomponente eines Matrixmaterials (15) durchtränkt werden,
- Konfektionieren der textilen Struktur zu einem faserverstärkten textilen Faserhalbzeug (37), und
- Pressen/Tiefziehen des faserverstärkten textilen Faserhalbzeugs (37) in die Form des herzustellenden faserverstärkten Kunststoffbauteils, und zwar bei gleichzeitiger Erwärmung des faserverstärkten textilen Faserhalbzeugs (37) auf eine Temperatur oberhalb der Polymerisations-Starttemperatur, wobei
die Trägerschicht (5) zumindest eine Endlosfaserlage (9) aufweist, die in einem Imprägnierschritt von einer Dosieranlage (29) mit einer reaktiven, thermoplastischen Ausgangskomponente eines Matrixmaterials (11) durchtränkt wird, und wobei die Kurzfasern (13) als prozessfremdes, frisches, das heißt in einem Trockenzustand befindliches Fasermaterial mit vordefinierter Faserlänge bereitgestellt werden,
**dadurch gekennzeichnet, dass** die noch im Trockenzustand befindlichen Kurzfasern (13) in der Dosieranlage (29) der flüssigen Matrixmaterial-Ausgangskomponente beigemischt werden und im Imprägnierschritt gemeinsam mit der Matrixmaterial-Ausgangskomponente aufgetragen werden, so dass sowohl die Drucktränkung der Trägerschicht (5) als auch der Kurzfaser-Auftrag auf die Trägerschicht (5) gleichzeitig erfolgt.

5. Verfahren zur Herstellung eines faserverstärkten Kunststoffbauteils, mit den folgenden Prozessschritten
- Bereitstellen einer zumindest zwei- oder mehrschichtigen textilen Struktur aus einer Trägerschicht (5), auf der eine Kurzfaserschicht (7) aufgetragen ist, in der Kurzfasern (13) mit einer noch nicht polymerisierten reaktiven thermoplastischen Ausgangskomponente eines Matrixmaterials (15) durchtränkt werden,
- Konfektionieren der textilen Struktur zu einem faserverstärkten textilen Faserhalbzeug (37), und
- Pressen/Tiefziehen des faserverstärkten textilen Faserhalbzeugs (37) in die Form des herzustellenden faserverstärkten Kunststoffbauteils, und zwar bei gleichzeitiger Erwärmung des faserverstärkten textilen Faserhalbzeugs (37) auf eine Temperatur oberhalb der Polymerisations-Starttemperatur, wobei
die Trägerschicht (5) zumindest eine Endlosfaserlage (9) aufweist, die in einem Imprägnierschritt von einer ersten Dosieranlage (29) mit einer reaktiven, thermoplastischen Ausgangskomponente eines Matrixmaterials (11) durchtränkt wird, und wobei die Kurzfasern (13) als prozessfremdes, frisches, das heißt in einem Trockenzustand befindliches Fasermaterial mit vordefinierter Faserlänge bereitgestellt werden,
**dadurch gekennzeichnet, dass** im Imprägnierschritt die Trägerschicht (5) mit einer kurzfaserfreien Matrixmaterial-Ausgangskomponente durchtränkt wird, und dass anschließend ein Auftrags-Prozessschritt erfolgt, in dem die Matrixmaterial-Ausgangskomponente mit in einer von der ersten Dosieranlage (29) separaten zweiten Dosieranlage (55) beigemischten Kurzfasern (13) auf die Trägerschicht (5) aufgetragen wird.

6. Verfahren nach einem der vorhergehenden Ansprüche, **dadurch gekennzeichnet, dass** auf die zweischichtige, textile Struktur aus Trägerschicht (5) und Kurzfaserschicht (7) eine dritte Faserschicht (57) aufgetragen wird, und zwar unter Bildung einer Sandwich-Struktur, und dass insbesondere die Kurzfaserschicht (7) als mittlere Schicht zusätzlich aufgeschäumt wird.

7. Verfahren nach einem der vorhergehenden Ansprüche, **dadurch gekennzeichnet, dass** auf die zumindest zweischichtige textile Struktur ein- oder beidseitig als unterste und/oder oberste Schicht eine Kaschierfolie (23, 25) aufgetragen wird, die eine Oberflächen- und Schutzfunktion bewirkt.

8. Verfahren nach einem der vorhergehenden Ansprüche, **dadurch gekennzeichnet, dass** das faserverstärkte Kunststoffbauteil ein flächiges Träger-Bauteil (1) mit einer davon abragenden kurzfaserverstärkten Krafteinleitungsstruktur (3) ist, das in einem Presswerkzeug (41) gepresst wird, und dass in dem Presswerkzeug (41) eine Werkzeughälfte (43) eine Negativform (44) der Krafteinleitungsstruktur (3) nachbildet, und dass das Faserhalbzeug (37) so in eine Werkzeug-Kavität (39) eingelegt wird, dass dessen Kurzfaserschicht (7) der in der Werkzeughälfte (43) gebildeten Negativform (44) der Krafteinleitungsstruktur (3) zugewandt ist, und dass insbesondere die Werkzeughälfte (43) in einer Werkzeug-Hochrichtung oben liegt, so dass die erwärmte, schmelzflüssige Matrixmaterial-Ausgangskomponente nach oben in die Negativform (44) der oberen Werkzeughälfte (43) gepresst wird.

9. Verfahren nach Anspruch 8, **dadurch gekennzeichnet, dass** das Presswerkzeug (41) in der Werkzeug-Hochrichtung die obere Werkzeughälfte (43) und eine untere Werkzeughälfte (45) aufweisen, die eine Werkzeugkavität (39) definieren, in die das Faserhalbzeug (37) einlegbar ist, und dass bei geschlossenem Presswerkzeug (41) die obere Werkzeughälfte (43) über einen vertikalen Tauchkantenspalt (t) von der unteren Werkzeughälfte (45) beabstandet ist, welcher Tauchkantenspalt (t) unten in die Werkzeugkavität (39) mündet und oben in einen insbesondere horizontalen Dichtungsspalt (47) mündet, der zwischen der oberen und unteren Werkzeughälfte (43, 45) ausgebildet ist.

10. Verfahren nach Anspruch 9, **dadurch gekennzeichnet, dass** der Dichtungsspalt (47) unterteilt ist in einen dem Tauchkantenspalt (t) zugewandten Drosselungsspalt (d) und einer davon abgewandten Dichtzone mit zumindest einem, insbesondere zwei um die Werkzeugkavität (39) umlaufenden Dichtelementen (49, 51).

11. Verfahren nach Anspruch 10, **dadurch gekennzeichnet, dass** zwischen dem inneren ersten Dichtelement (49) und dem äußeren zweiten Dichtelement (51) eine Überlaufkavität (53) in der unteren oder oberen Werkzeughälfte (45, 43) ausgebildet ist.

## Claims

1. Method for producing a fiber-reinforced plastic component, comprising the following process steps:
- providing an at least two-layer or multilayer textile structure consisting of a carrier layer (5), onto which a short-fiber layer (7) is applied, in which short fibers (13) are saturated with a not-yet-polymerized, reactive, thermoplastic starting component of a matrix material (15),
- assembling the textile structure to form a fiber-reinforced, semi-finished textile fiber product (37), and
- pressing / deep-drawing the fiber-reinforced, semi-finished textile fiber product (37) into the shape of the fiber-reinforced plastic component to be produced, viz., while simultaneously heating the fiber-reinforced, semi-finished textile fiber product (37) to a temperature above the polymerization start temperature, wherein the carrier layer (5) has at least one endless fiber layer (9) which, in an impregnation step, is saturated with a reactive, thermoplastic starting component of a matrix material (11), and wherein the short fibers (13) are provided as a non-processed, fresh (i.e., in a dry state) fiber material with a predefined fiber length, **characterized in that** the dry short fibers (13) are applied to the already impregnated carrier layer (5).

2. Method according to claim 1, **characterized in that** excess material of the matrix material of the carrier layer (5) is used as the matrix material for the applied, dry short fibers (13).

3. Method according to claim 1, **characterized in that** the dry short fibers (13) applied to the impregnated carrier layer (5) are saturated in a second impregnation step downstream in terms of process technology, viz., at a matrix-material application point (38), which is positioned in the process direction after a short-fiber application point (31), **and in that** the matrix-material application point (38) in particular is supplied with matrix material either by the metering system (29) or by a separate metering system (55).

4. Method for producing a fiber-reinforced plastic component, comprising the following process steps:
- providing an at least two-layer or multilayer textile structure consisting of a carrier layer (5), onto which a short-fiber layer (7) is applied, in which short fibers (13) are saturated with a not-yet-polymerized, reactive, thermoplastic starting component of a matrix material (15),
- assembling the textile structure to form a fiber-reinforced, semi-finished textile fiber product (37), and
- pressing / deep-drawing the fiber-reinforced, semi-finished textile fiber product (37) into the shape of the fiber-reinforced plastic component to be produced, viz., while simultaneously heating the fiber-reinforced, semi-finished textile fiber product (37) to a temperature above the polymerization start temperature, wherein
the carrier layer (5) has at least one endless fiber layer (9) which, in an impregnation step, is saturated with a reactive, thermoplastic starting component of a matrix material (11) by a metering system (29), and wherein the short fibers (13) are provided as a non-processed, fresh (i.e., in a dry state) fiber material with a predefined fiber length,
**characterized in that** the short fibers (13) still in the dry state are mixed with the liquid matrix-material starting component in the metering system (29) and are applied together with the matrix-material starting component in the impregnation step so that both the saturation of the carrier layer (5) and the application of short fibers to the carrier layer (5) take place simultaneously.

5. Method for producing a fiber-reinforced plastic component, comprising the following process steps:
- providing an at least two-layer or multilayer textile structure consisting of a carrier layer (5), onto which a short-fiber layer (7) is applied, in which short fibers (13) are saturated with a not-yet-polymerized, reactive, thermoplastic starting component of a matrix material (15),
- assembling the textile structure to form a fiber-reinforced, semi-finished textile fiber product (37), and
- pressing / deep-drawing the fiber-reinforced, semi-finished textile fiber product (37) into the shape of the fiber-reinforced plastic component to be produced, viz., while simultaneously heating the fiber-reinforced, semi-finished textile fiber product (37) to a temperature above the polymerization start temperature, wherein
the carrier layer (5) has at least one endless fiber layer (9) which, in an impregnation step, is saturated with a reactive, thermoplastic starting component of a matrix material (11) by a first metering system (29), and wherein the short fibers (13) are provided as a non-processed, fresh (i.e., in a dry state) fiber material with a predefined fiber length,
**characterized in that,** in the impregnation step, the carrier layer (5) is saturated with a short-fiber-free, matrix-material starting component, **and in that** an application process step subsequently takes place, in which the matrix-material starting component is applied to the carrier layer (5) with short fibers (13) admixed in a second metering system (55) separate from the first metering system (29).

6. Method according to one of the preceding claims, **characterized in that** a third fiber layer (57) is applied to the two-layer, textile structure consisting of the carrier layer (5) and the short-fiber layer (7), viz., while forming a sandwich structure, **and in that** the short-fiber layer (7) in particular is, additionally, foamed as the middle layer.

7. Method according to one of the preceding claims, **characterized in that** a laminating film (23, 25) is applied to the at least two-layer textile structure on one or both sides as a lowermost and/or uppermost layer and brings about a surface and protective function.

8. Method according to one of the preceding claims, **characterized in that** the fiber-reinforced plastic component is a flat carrier component (1), with a short-fiber-reinforced, force-introduction structure (3) projecting therefrom, which is pressed in a pressing tool (41), **and in that,** in the pressing tool (41), a tool-half (43) reproduces a negative mold (44) of the force-introduction structure (3), **and in that** the semi-finished fiber product (37) is inserted into a tool cavity (39) such that its short-fiber layer (7) faces the negative mold (44) of the force introduction structure (3) formed in the tool-half (43), **and in that** the tool-half (43) in particular lies at the top in a vertical tool direction so that the heated, molten, matrix-material starting component is pressed upwards into the negative mold (44) of the upper tool-half (43).

9. Method according to claim 8, **characterized in that,** in the vertical tool direction, the pressing tool (41) has the upper tool-half (43) and a lower tool-half (45), which define a tool cavity (39) into which the semi-finished fiber product (37) can be inserted, **and in that,** when the pressing tool (41) is closed, the upper tool-half (43) is spaced apart from the lower tool-half (45) via a vertical dipping-edge gap (t), which dipping-edge gap (t) opens at the bottom into the tool cavity (39) and opens at the top into an, in particular, horizontal sealing gap (47), which is formed between the upper and lower tool-halves (43, 45).

10. Method according to claim 9, **characterized in that** the sealing gap (47) is divided into a throttling gap (d) facing the dipping-edge gap (t) and a sealing zone facing away from it with at least one - in particular, two - sealing elements (49, 51), surrounding the tool cavity (39).

11. Method according to claim 10, **characterized in that,** between the inner, first sealing element (49) and the outer, second sealing element (51), an overflow cavity (53) is formed in the lower or upper tool-half (45, 43).

## Revendications

1. Procédé pour produire un élément plastique renforcé par des fibres, comprenant les étapes de processus suivantes
- la fourniture d'au moins une structure textile à deux ou plusieurs couches composée d'une couche de support (5), sur laquelle une couche de fibres courtes (7) est appliquée, dans laquelle les fibres courtes (13) sont imprégnées d'un composant de départ thermoplastique réactif pas encore polymérisé d'une matière matricielle (15),
- la confection de la structure textile en un semi-produit fibreux (37) textile renforcé par des fibres et
- le pressage/emboutissage du semi-produit fibreux (37) textile renforcé par des fibres dans la forme de l'élément plastique renforcé par des fibres à produire et ce tout en chauffant simultanément le semi-produit fibreux (37) textile renforcé par des fibres à une température supérieure à la température de démarrage de la polymérisation, la couche de support (5) présentant au moins une couche de fibre continue (9), laquelle est imprégnée, dans une étape d'imprégnation, d'un composant de départ thermoplastique réactif d'une matière matricielle (11) et les fibres courtes (13) sont fournies comme un matériau fibreux frais, c'est à dire se trouvant à l'état sec, étranger au processus avec une longueur de fibre prédéfinie, **caractérisé en ce que** les fibres courtes (13) sèches sont appliquées sur la couche de support (5) déjà imprégnée.

2. Procédé selon la revendication 1, **caractérisé en ce qu'**un matériau excédentaire de la matière matricielle de la couche de support (5) est utilisé en tant que matière matricielle pour les fibres courtes (13) sèches appliquées.

3. Procédé selon la revendication 1, **caractérisé en ce qu'**une imprégnation des fibres courtes (13) sèches appliquées sur la couche de support (5) imprégnée est effectuée dans une deuxième étape d'imprégnation en aval dans le processus et ce sur un emplacement d'application de matière matricielle (38), lequel est positionné, dans la direction du processus, après un emplacement d'application de fibres courtes (31) **et en ce qu'**en particulier l'emplacement d'application de matière matricielle (38) est alimenté en matière matricielle soit par l'installation de dosage (29) soit par une installation de dosage (55) séparée.

4. Procédé pour produire un élément plastique renforcé par des fibres, comprenant les étapes de processus suivantes
- la fourniture d'au moins une structure textile à deux ou plusieurs couches composée d'une couche de support (5), sur laquelle une couche de fibres courtes (7) est appliquée, dans laquelle les fibres courtes (13) sont imprégnées d'un composant de départ thermoplastique réactif pas encore polymérisé d'une matière matricielle (15),
- la confection de la structure textile en un semi-produit fibreux (37) textile renforcé par des fibres et
- le pressage/emboutissage du semi-produit fibreux (37) textile renforcé par des fibres dans la forme de l'élément plastique renforcé par des fibres à produire et ce tout en chauffant simultanément le semi-produit fibreux (37) textile renforcé par des fibres à une température supérieure à la température de démarrage de la polymérisation,
la couche de support (5) présentant au moins une couche de fibre continue (9), laquelle est imprégnée, dans une étape d'imprégnation, par une installation de dosage (29) d'un composant de départ thermoplastique réactif d'une matière matricielle (11) et les fibres courtes (13) étant fournies comme un matériau fibreux frais, c'est à dire se trouvant à l'état sec, étranger au processus avec une longueur de fibre prédéfinie,
**caractérisé en ce que** les fibres courtes (13) se trouvant encore à l'état sec sont mélangées dans l'installation de dosage (29) au composant de départ de la matière matricielle et sont appliquées, dans l'étape d'imprégnation, conjointement avec le composant de départ de la matière matricielle, de sorte que l'imprégnation de la couche de support (5) ainsi que l'application des fibres courtes sur la couche de support (5) soient effectuées simultanément.

5. Procédé pour produire un élément plastique renforcé par des fibres, comprenant les étapes de processus suivantes
- la fourniture d'au moins une structure textile à deux ou plusieurs couches composée d'une couche de support (5), sur laquelle une couche de fibres courtes (7) est appliquée, dans laquelle les fibres courtes (13) sont imprégnées d'un composant de départ thermoplastique réactif pas encore polymérisé d'une matière matricielle (15),
- la confection de la structure textile en un semi-produit fibreux (37) textile renforcé par des fibres et
- le pressage/emboutissage du semi-produit fibreux (37) textile renforcé par des fibres dans la forme de l'élément plastique renforcé par des fibres à produire et ce tout en chauffant simultanément le semi-produit fibreux (37) textile renforcé par des fibres à une température supérieure à la température de démarrage de la polymérisation,
la couche de support (5) présentant au moins une couche de fibre continue (9), laquelle est imprégnée, dans une étape d'imprégnation, par une première installation de dosage (29) d'un composant de départ thermoplastique réactif d'une matière matricielle (11) et les fibres courtes (13) sont fournies comme un matériau fibreux frais, c'est à dire se trouvant à l'état sec, étranger au processus avec une longueur de fibre prédéfinie,
**caractérisé en ce que,** dans l'étape d'imprégnation, la couche de support (5) est imprégnée d'un composant de départ de matière matricielle exempt de fibres courtes **et en ce qu'**ensuite une étape de processus d'application est effectuée, dans laquelle le composant de départ de matière matricielle est appliqué sur la couche de support (5) avec des fibres courtes (13) mélangées dans une deuxième installation de dosage (55) séparée de la première installation de dosage (29).

6. Procédé selon l'une quelconque des revendications précédentes, **caractérisé en ce qu'**une troisième couche de fibres (57) est appliquée sur la structure textile à deux couches composée de la couche de support (5) et de la couche de fibres courtes (7) et ce en formant une structure de sandwich **et en ce qu'**en particulier la couche de fibres courtes (7) est en outre expansée en tant que couche médiane.

7. Procédé selon l'une quelconque des revendications précédentes, **caractérisé en ce que,** sur la structure textile à au moins deux couches, un film de pelliculage (23, 25) est appliqué sur un ou les deux côtés comme couche la plus inférieure et/ou la plus supérieure, lequel produit une fonction de surface ou de protection.

8. Procédé selon l'une quelconque des revendications précédentes, **caractérisé en ce que** l'élément plastique renforcé par des fibres est un composant de support plan (1) comprenant une structure de transmission de forces (3) renforcée par des fibres courtes qui en fait saillie, lequel est pressé dans un outil de presse (41) **et en ce que,** dans l'outil de presse (41), une moitié d'outil (43) reproduit une forme négative (44) de la structure de transmission de forces (3) **et en ce que** le semi-produit fibreux (37) est placé de telle façon dans une cavité d'outil (39), que sa couche de fibres courtes (7) fasse face à la forme négative (44) de la structure de transmission de forces (3) reproduite dans la moitie d'outil (43) **et en ce qu'**en particulier la moitié d'outil (43) se situe en haut dans la direction verticale de l'outil, de sorte que le composant de départ de matière matricielle chauffé fondu soit pressé vers le haut dans la forme négative (44) de la moitié d'outil (43) supérieure.

9. Procédé selon la revendication 8, **caractérisé en ce que** l'outil de presse (41) présente dans la direction verticale de l'outil la moitié d'outil (43) supérieure et une moitié d'outil (45) inférieure, lesquelles définissent une cavité d'outil (39), dans laquelle le semi-produit fibreux (37) peut être posé **et en ce que,** lorsque l'outil de presse (41) est fermé, la moitié d'outil (43) supérieure est espacée par le biais d'une arête de plongée (t) verticale de la moitié d'outil (45) inférieure, laquelle arête de plongée (t) débouche en bas dans la cavité d'outil (39) et en haut dans une fente d'étanchéité (47) en particulier horizontale, qui est formée entre les moitiés d'outil (43, 45) supérieure et inférieure.

10. Procédé selon la revendication 9, **caractérisé en ce que** la fente d'étanchéité (47) est divisée en une fente de réduction (d) faisant face à l'arête de plongée (t) et une zone d'étanchéité opposée à celle-ci, comprenant au moins un, en particulier deux éléments d'étanchéité (49, 51) entourant la cavité d'outil (39).

11. Procédé selon la revendication 10, **caractérisé en ce qu'**une cavité d'échappement (53) est formée dans la moitié d'outil (45, 43) inférieure ou supérieure entre le premier élément d'étanchéité (49) interne et le deuxième élément d'étanchéité (51) externe.
